# EUROPEAN PATENT APPLICATION

(11) **EP 4 797 364 A1**
(43) Date of publication of application: **26.08.2026**
(21) Application number: 25159665.6
(22) Date of filing: 24.02.2025
(51) Int. Cl.: H01M 8/04014, H01M 8/04111, H01M 8/243, B64D 41/00, H01M 8/12

(54) **ENERGY CONVERSION ARRANGEMENT WITH PRE-HEATING DUCT FOR REACTANT GAS, AS WELL AS ENERGY SYSTEM AND APPARATUS COMPRISING SAME**

(71) Applicant: AIRBUS Operations GmbH, 21129 Hamburg (DE)
(72) Inventor: Nehter, Pedro, 21129 Hamburg (DE); Geisler, Helge Ingolf, 21129 Hamburg (DE); Ahilan, Vignesh, 21129 Hamburg (DE)
(74) Representative: Airbus Germany

(57) **Abstract**

An energy conversion arrangement (2) for an apparatus (1), a corresponding energy system (2), in particular for powering a propulsion unit (5) for propelling an apparatus (1), and an apparatus (1), in particular an aircraft, are provided, comprising a fuel conversion device (10), in particular a fuel cell unit, for generating electrical and/or mechanical energy by oxidising a reductant (R) contained in a fuel gas (F) by means of an oxidant (O) contained in a reactant gas (G), with at least one cathode element (32) configured to provide electrons (e) shed by the reductant (R) and to be picked up by the oxidant (O) during fuel conversion; at least one cathode channel (13) configured to lead the reactant gas (G) along the at least one cathode element (32); and at least one preheating duct (14) configured to lead the reactant gas (G) to the cathode channel (13) and to heat up the reactant gas (G) by heat provided by the reactant gas (G) in the cathode channel (13).

## Description

### Technical Field

The present disclosure relates to the field of energy systems comprising fuel cells, particularly solid oxide fuel cells (SOFC) in lightweight applications involving energy conversion of hydrogen, hydrocarbon or ammonia type of fuels for providing electrical energy enabling aircraft propulsion. In particular, the disclosure relates to an energy conversion arrangement for an apparatus, such as an aircraft, comprising a fuel conversion device, in particular a fuel cell unit, for generating electrical and/or mechanical energy by oxidising a reductant contained in a fuel gas by means of an oxidant contained in a reactant gas, to an energy system, in particular for powering a propulsion unit for propelling an apparatus, such as an aircraft, and to an apparatus, in particular aircraft.

### Technical Background

Alternative fuels are currently emerging for replacing fossil fuels in order to avoid their environmental impact. Vehicles, such as hydrogen powered fuel cell aircrafts, may use hydrogen to power their propulsion and also for power generation, in that the alternative fuels may replace conventional fuels, such as kerosene, for operating any fuel conversion device on the aircraft, including propulsion units and auxiliary power units (APUs). The electrochemical conversion of hydrogen does not directly lead to a formation of carbon dioxide as well as other hydrocarbon combustion related emissions, such as particulates, and is thus seen as a pathway to an environmentally friendly and sustainable aviation.

According to the prior art, SOFC are originally mainly developed for stationary applications due to their relatively low gravimetric power density. However, recent progress in SOFC development allows for high power densities. Manufacturing technologies have evolved that allow for providing tubular and monolithic SOFC concepts to some very attractive solutions for aviation applications. Emerging production techniques, such as additive manufacturing of ceramics (e.g., scandia stabilized zirconia) allow for providing electrolyte supported cells operating at temperatures of >750°C, applicable for high power density concepts like monolithic and/or micro channel geometries.

Main components of typically planar SOFC stacks according to the prior art are their cells and interconnectors configured to connect multiple planar cells electrically in series and furthermore to achieve practical usable voltages. The cells commonly consist of an oxide conducting ceramic electrolyte covered with a negatively charged electrode (anode) on a fuel side and positively charged electrode (cathode) on an air side during operation of the SOFC stack. Metallic interconnectors are commonly used to electrically connect each cell of the stack to its neighbouring cell and furthermore to separate the fuel from the air gas channel of two neighbouring cells.

SOFCs known from the prior art are commonly cooled to maintain a preferred operating temperature by an excess of reactant air provided to the cathode side of the SOFC. Planar stack concepts typically require relatively small thermal gradients to avoid mechanical stresses within the fragile ceramic materials. Thus, a relatively large air flow for cooling of the SOFC is required, which in turn requires large and heavy heat exchangers for preheating intake air from the temperature level of an air intake, which can be arranged at the outlet of the air compressor, for example, in order to be heated up to the required temperature level at an inlet of the SOFC. In this regards, emerging tubular and monolithic cell designs offer a major optimization potential in this because the air preheating can principally be integrated within the stack, which very effectively reduces the amount of cooling air.

US 2012/058410 A1, for example, describes an SOFC including a tubular first electrode support layer formed with a plurality of first passages; an inner electrolyte layer formed in the first electrode support layer; an inner second electrode layer formed on the inner surface of the first electrolyte layer and forming an inner second passage; an outer electrolyte layer formed on the outer surface of the first electrode support layer; and an outer second electrode layer formed on the outer surface of the second electrolyte layer and adjacent to the outer second passage.

B. Hari, J.P. Brouwer, A. Dhir, R. Steinberger-Wilckens, "A computational fluid dynamics and finite element analysis design of a microtubular solid oxide fuel cell stack for fixed wing mini unmanned aerial vehicles", International Journal of Hydrogen Energy, Volume 44, Issue 16, 2019, Pages 8519-8532, ISSN 0360-3199, https://doi.org/10.1016/j.ijhydene.2019.01.170. (https://www.sciencedirect.com/science/article/pii/S0360319919303283), for example, state that computational fluid dynamics (CFD) and finite element analysis (FEA) are important modelling and simulation techniques to design and develop fuel cell stacks and their balance of plant (BoP) systems. The aim of their work is to design a microtubular solid oxide fuel cell (SOFC) stack by coupling CFD and FEA models to capture the multiphysics nature of the system. The focus is to study the distribution of fluids inside the fuel cell stack, the dissipation of heat from the fuel cell bundle, and any deformation of the fuel cells and the stack canister due to thermal stresses, which is important to address during the design process. The stack is part of an innovative all-in-one SOFC generator with an integrated BoP system to power a fixed wing mini unmanned aerial vehicle. Including the computational optimisation at an early stage of the development process is hence a prerequisite in developing a reliable and robust all-in-one SOFC generator system. The presented computational model considers the bundle of fuel cells as the heat source. This could be improved in the future by replacing the heat source with electrochemical reactions to accurately predict the influence of heat on the stack design.

F.J Gardner, M.J Day, N.P Brandon, M.N Pashley, M Cassidy, "SOFC technology development at Rolls-Royce", Journal of Power Sources, Volume 86, Issues 1-2, 2000, Pages 122-129, ISSN 0378-7753, https://doi.org/10.1016/S0378-7753(99)00428-0. (https://www.sciencedirect.com/science/article/pii/S0378775399004280), state that fuel cells have the prospect for exploiting fossil fuels more benignly and more efficiently than alternatives. The various types represent quite different technologies, with no clear winner, yet. Nevertheless, the high temperature MCFC and solid oxide fuel cell (SOFC) types seem better suited to power generation in a hydrocarbon fuel economy. During the time of the study, the costs of MCFCs and SOFCs are too high to compete directly with contemporary power generation plant. Seeking to overcome the drawbacks of first generation fuel cells, over the past 7 years before the study an innovative second generation SOFC concept has been evolved in the Rolls-Royce Strategic Research Centre, with encouraging results. It is distinguished from other types by the name: Integrated Planar Solid Oxide Fuel Cell (IP-SOFC). It is a family of integrated system concepts supporting product flexibility with evolutionary stretch potential from a common SOFC module. Fabrication of the key component of the IP-SOFC, the "multi-cell membrane electrode assembly (multi-cell MEA) module" carrying many series connected cells with supported electrolyte membranes only 10 to 20 µm thick, has been proved.

Above-described Cell designs as known from the prior art may offer some optimization potential in that air preheating capabilities can principally be integrated in the fuel cell stack, thus allowing to reduce an amount of cooling air very effectively. However, temperature differences between the inlet of the and air outlet of cells as known from the prior art remain at around 300 K for tubular SOFC concepts which is still too small to design a compact system allowing to use hydrogen as a fuel. The disadvantage of cooling concepts known from the prior art especially apply to hydrogen operation in that only limited temperature differences (approx. 150 to 200 K) for planar SOFC concepts can be used between the air in- and outlet for heating up inlet air, thus requiring relatively large system components, such as compressors and pre-heating heat exchangers.

### Summary

It may thus be seen as an object to it may be seen as an object to further increase power density of energy systems comprising fuel cells. Moreover, it can be seen as an object to reduce overall system weights and costs, particularly for allowing the utilization of hydrogen, hydrocarbon or ammonia-based fuel powered SOFC in airborne apparatuses. These objects are at least partly achieved by the subject-matter of the independent claims.

According to an aspect, an energy for an apparatus, such as an aircraft, is provided, comprising a fuel conversion device, in particular a fuel cell unit, for generating electrical and/or mechanical energy by oxidising a reductant contained in a fuel gas by means of an oxidant contained in a reactant gas, with at least one cathode element configured to provide electrons shed by the reductant and to be picked up by the oxidant during fuel conversion; at least one cathode channel configured to lead the reactant gas along the at least one cathode element; and at least one pre-heating duct configured to lead the reactant gas to the cathode channel and to heat up the reactant gas by heat provided by the reactant gas in the cathode channel.

According to an aspect, an energy system, in particular for powering a propulsion unit for propelling an apparatus, such as an aircraft, is provided comprising a corresponding energy conversion arrangement.

According to an aspect, an apparatus, in particular aircraft, is provided, comprising a corresponding energy conversion arrangement and/or a corresponding energy system.

The proposed solution allows to pre-heat the reactant gas, such as air, within the pre-heating duct by heat picked up from the reactant gas, in particular during and/or after being depleted of the oxidant the course of the energy conversion. While the reactant gas on the one hand is pre-heated on its way to the cathode channel, the reactant gas flowing within the cathode channel, and thus respective cathode side of the fuel cell unit can be cooled. This proposed usage of the reactant gas as a heating and cooling medium allows to reduce the overall amount of reactant gas required for operating a respective energy system.

Advantages of the proposed thus solution lie in that lowering a ratio of reactant gas, such as an air ratio, required for cooling the fuel conversion device in turn reduces overall system sizes, weight and cost. Furthermore, efficiency of the energy system can be increased. Consequently, the proposed solution allows to provide energy conversion arrangements and respective energy systems which meet requirements for airborne apparatuses, such as fixed and/or rotary wing aircraft and alike.

Further developments can be derived from the dependent claims and from the following description. Features described with reference to devices and arrangements may be implemented as method steps, or vice versa. Therefore, the description provided in the context of the apparatus and its components apply in an analogous manner also to respective methods. In particular, the functions of the apparatus and of its components may be implemented as method steps of the methods and the method steps may be implemented as functions of the apparatus and its components.

According to an embodiment, the at least one cathode channel and the at least one pre-heating duct are at least partially configured to provide a counter-flow heat exchange between the reactant gas in the at least one cathode channel and the reactant gas in the at least one pre-heating duct. By providing a counterflow heat exchange, the reactant gas in the pre-heating duct may be preheated to a temperature at an outlet of the pre-heating duct which can be higher than a temperature of the reactant gas at an outlet of the cathode channel. Thereby, an amount of thermal energy exchanged between the reactant gas in the pre-heating duct and the cathode channel may be maximised. This in turn further helps in lowering a ratio of reactant gas required for cooling the fuel conversion device, thus enables to reduce overall system sizes, weight and cost, while increasing efficiency of the energy system.

According to an embodiment, the at least one pre-heating duct is least partially arranged within the at least one cathode channel and the reactant gas in the at least one pre-heating duct. In other words, the at least one pre-heating duct can be at least section-wise integrated into the cathode channel. This further helps in maximising an amount of thermal energy exchanged between the reactant gas in the pre-heating duct and the cathode channel, enables to lower a ratio of reactant gas required for cooling the fuel conversion device, and to reduce overall system sizes, weight and cost, while efficiency of the energy system can be increased.

According to an embodiment, the at least one cathode element, the at least one cathode channel and/or the at least one pre-heating duct are at least partially arranged coaxially with respect to each other. The coaxial arrangement allows for integrating the pre-heating duct in the cathode channel in a manner that on the one hand, a compact design of the energy conversion arrangement is provided. On the other hand, surface area made available for heat transfer by respective heat exchange surfaces provided at the outer and inner perimeters of the pre-heating duct and the cathode channel can be maximised. This additionally helps in maximising an amount of thermal energy exchanged between the reactant gas in the pre-heating duct and the cathode channel, enables to lower a ratio of reactant gas required for cooling the fuel conversion device, and to reduce overall system sizes, weight and cost, while efficiency of the energy system can be increased.

According to an embodiment, the energy system further comprises a primary conversion zone configured to operate at a first operating pressure of the fuel gas and/or the reactant gas, and a secondary conversion zone configured to operate at a second operating pressure of the fuel gas and/or the reactant gas. The respective operating pressures can be adjusted to respective properties of the fuel gas and/or the reactant gas, such as the amount of reductant and/or oxidant, respectively, contained therein. This helps in adapting the fuel conversion device to respective reductant and oxidant sources.

According to an embodiment, the first operating pressure is higher than the second operating pressure. For example, a lower pressure level can be provided for the secondary air comparison to primary air, which enables to reduce the size and thus weight of the any structure, such as walls of ducts and/or compartment separating the secondary air from the environment which can have a significant pressure difference for airborne applications. This further helps to provide energy conversion arrangements and respective energy systems which meet requirements for airborne apparatuses.

According to an embodiment, the energy system further comprises at least one expansion unit arranged in a flow path of the reactant gas between the primary conversion zone and the secondary conversion zone and configured to expand the reactant gas on its way from the primary conversion zone to the secondary conversion zone. By expanding the reactant gas, a lower operating pressure can be provided in the secondary conversion zone as compared to the primary conversion zone. Thereby, again the size and thus weight of the any structure, such as walls of ducts and/or compartment separating the reactant gas in the secondary conversion zone from the environment can be reduced which further helps to provide energy conversion arrangements and respective energy systems which meet requirements for airborne apparatuses.

According to an embodiment, the expansion unit comprises a turbine assembly and/or a heat exchange assembly configured to cool down the reactant gas. The reactant gas can be cooled down by expanding it the turbine assembly and exchange assembly by both, pressure drop and heat exchange. The cooled down reactant gas can again be used for the cooling of the fuel conversion device. This additionally helps in lowering a ratio of reactant gas required for cooling the fuel conversion device, thus enables to reduce overall system sizes, weight and cost, while increasing efficiency of the energy system.

According to an embodiment, the energy system further comprises at least one compressor assembly configured to be driven by the turbine assembly and to compress the reactant gas fed into the pre-heating duct. For example, the compressor assembly and the turbine assembly may be arranged back-to-back with respect to each other. In the back-to-back arrangement a radial configuration may be implemented for both, the compressor assembly and the turbine assembly. Alternatively, an axial-radial and/or radial-axial configuration may be implemented for the compressor assembly and/or the turbine assembly, respectively. Thereby, compactness of the energy conversion arrangement and thus the energy system may be further increased which additionally helps to provide energy conversion arrangements and respective energy systems which meet requirements for airborne apparatuses.

According to an embodiment, the primary conversion zone at least partly surrounds the secondary conversion zone. On the one hand, thereby compactness of the energy conversion arrangement and thus energy system can be further increased. On the other hand, the size and thus weight of the any structure, such as walls of ducts and/or compartment separating the secondary conversion zone from the primary conversion zone, and the primary conversion zone from the environment can be adapted to respective pressure and temperature levels. This additionally helps to increase compactness of the energy conversion arrangement and thus the energy system, further enabling to provide energy conversion arrangements and respective energy systems which meet requirements for airborne apparatuses.

According to an embodiment, the primary conversion zone and/or the secondary conversion zone comprise or comprises, respectively, a number of cathode channels and/or pre-heating ducts, and at least one manifold configured to collect and/or provide the reactant gas from and/or to the cathode channels and/or pre-heating ducts, respectively. Respective numbers of ducts may be chosen and scaled according to energy conversion capacity requirements. This helps to provide a certain scalability of the energy conversion arrangement and to further increase its compactness, while potentially facilitating its manufacturing.

According to an embodiment, the energy system further comprises at least one anode element configured to take up the electrons shed by the reductant and to be picked up by the oxidant during fuel conversion; and at least one anode channel configured to lead the reactant gas along the at least one anode element; wherein the at least one cathode channel at least partially extends within the at least one anode channel. In other words, the cathode channel can be integrated into the anode channel. This further helps in maximising an amount of thermal energy exchanged between the reactant gas in the pre-heating duct and the cathode channel, enables to lower a ratio of reactant gas required for cooling the fuel conversion device, and to reduce overall system sizes, weight and cost, while efficiency of the energy system can be increased.

According to an embodiment, the at least one cathode element, the at least one cathode channel, the at least one pre-heating duct, the at least one anode element and/or the at least one anode channel at least section-wise have a tubular, rectangular, trapezoidal or triangular shaped cross-section. Respective channels and ducts can have complementary shapes. This further helps in allowing to nest the channels and ducts into each other. Thereby, compactness of the energy conversion arrangement and thus the energy system can be further increased, which enables to provide particularly lightweight high density energy conversion arrangements and respective energy systems which meet requirements for airborne apparatuses.

### Brief Description of the Drawings

The subject matter will hereinafter be described in conjunction with the following drawing figures, wherein like numerals denote like elements, and wherein:
Fig. 1 is a schematic illustration of an exemplary embodiment of an apparatus in the form of an aircraft having an energy system with an energy conversion arrangement comprising a fuel conversion device embodied as a fuel cell unit.
Fig. 2 is a schematic illustration of an exemplary embodiment a fuel conversion device embodied as a fuel cell unit comprising a fuel cell element in the form of a solid oxide fuel cell (SOFC) of the apparatus.
Fig. 3 is a schematic illustration of a reactant gas flow distribution in an energy conversion arrangement embodied as a fuel cell unit comprising a fuel cell element of the apparatus.
Fig. 4 is a schematic illustration of an exemplary embodiment of the energy conversion arrangement of the apparatus comprising a fuel conversion device in the form of a fuel cell unit having multiple fuel cell elements.

### Detailed Description of the Drawings

The following detailed description is merely exemplary in nature and is not intended to limit the invention and uses of the invention. Furthermore, there is no intention to be bound by any theory presented in the preceding background or the following detailed description. The representations and illustrations in the drawings are schematic and not to scale. Like numerals denote like elements. A greater understanding of the described subject-matter may be obtained through a review of the illustrations together with a review of the detailed description that follows.

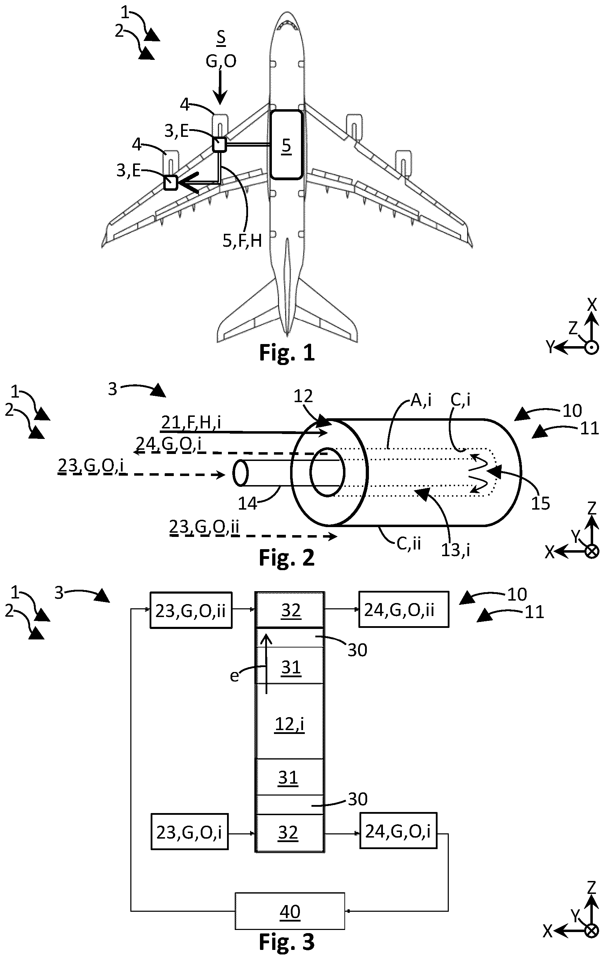

Fig. 1 shows a schematic representation of an apparatus 1 in the form of a vehicle, such as an aircraft, having an energy system 2 comprising fuel conversion arrangements 3, propulsion units 4 and a fuel reservoir 5, such as a fuel tank. The fuel conversion arrangements 3 are configured to provide electrical power E power to the apparatus 1, for example, for driving the proportion units 3. A fuel gas F containing a reactant H, such as hydrogen, hydrocarbon or ammonia type of fuel, may be provided to the fuel conversion arrangements 3 from the fuel reservoir 5 via fuel lines 5. In the fuel conversion arrangements 3, the reductant H can be chemically reduced by an oxidant O, such as oxygen, contained in a reactant gas G, for example, air, taken from ambient surroundings S, e.g., the atmosphere, surrounding the apparatus 1, to provide the electrical power E. The apparatus 1 can extend in a longitudinal direction X, a transverse direction Y and a height direction Z together constituting a Cartesian coordinate system.

Fig. 2 is a schematic illustration of an exemplary embodiment a fuel conversion device in the form of a fuel cell unit 10, such as a solid oxide fuel cell (SOFC), of the apparatus 1. The fuel cell unit 10 comprises at least one fuel cell element 11 or subunit having an anode channel 12 for the fuel gas F and a cathode channel 13 for the reactant gas R. A pre-heating duct 14 within an end section 15 may at least partially extend within the cathode channel 13 for pre-heating the reactant gas R.

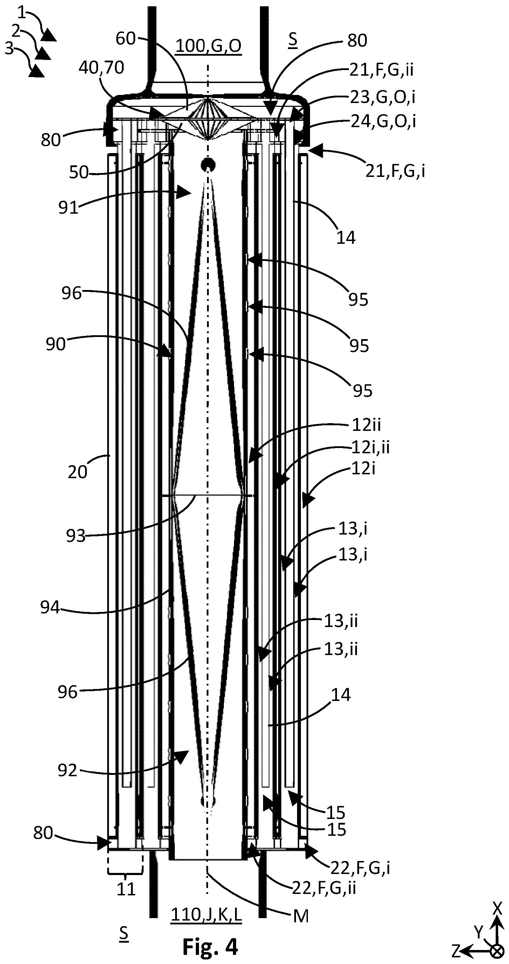

An enclosure 20 (see Fig. 4) of the fuel cell units 10 may house in multiple fuel cell elements 11. The enclosure 20 may provide at least one anode inlet 21 and anode outlet 22 on an anode side A, and at least one cathode inlet 23 and cathode outlet 24 on a cathode side C which may be associated to a primary conversion zone i and at least one secondary conversion zone ii of the fuel cell unit 10. The reactant gas G may enter the pre-heating tube 14 through the cathode inlet 23 for the primary conversion zone i and may exit the pre-heating tube 14 at the end section 15 to then enter the cathode channel 13, for example, after being redirected. The reactant gas G may then flow along the cathode channel 13 where it is being partially depleted of the oxidant O and then exits the cathode channel 13 through the cathode outlet 24 of the primary conversion zone i. The reactant gas G may then enter the secondary conversion zone ii through the respective cathode inlet 23.

Fig. 3 is a schematic illustration of an energy conversion arrangement 3 of the apparatus 1, showing a possible distribution of reactant gas G in one of the fuel cell elements 11 of the fuel cell unit 10. The fuel cell element 11 further comprises at least one electrolyte element 30, anode element 31 and cathode element 32. The electrolyte element 30 is configured to provide electrons e shed by the reductant H and transported by the oxidant O from the cathode element 32 to the anode element 31 in of course of generating the electrical power E. The anode element 31 is configured to pick up the electrons e from the reductant H. The cathode element 32 is configured to provide the electrons e to the oxidant O. Furthermore, an expansion unit 40 can be provided for expanding in the reactant gas G on its way from the primary conversion zone i to the secondary conversion zone ii.

Fig. 4 is a schematic illustration of an exemplary embodiment of the energy conversion arrangement 3 of the apparatus 1. The expansion unit 40 may comprise a turbine assembly 50 and/or a compressor assembly 60, which may be arranged back-to-back, such that the turbine assembly 50 may mechanically directly drive the compressor assembly 60. The expansion unit 40 may further serve as such or be configured as a heat exchange assembly 70 configured to heat up the reactant gas G before entering the fuel cell unit 10, for example, by means of thermal energy picked up from the reactant gas G within energy conversion arrangement 3, when leaving the primary conversion zone i and/or the secondary conversion ii.

Furthermore, the energy conversion arrangement 3 may comprise manifolds 80, a central distribution assembly 90, a reactant inlet 100 for distributing the reactant gas G and an exhaust outlet 110 for collecting anode exhausts J and cathode exhausts K remaining from the conversion of the fuel gas F and the reactant gas G, respectively. The fuel gas F may enter the fuel cell unit 10 through a manifold 80 which may be provided to lead the fuel gas F to the anode inlets 21 of the primary conversion zone i and/or the secondary conversion zone ii in a distributed manner to enter the anode channels 12. After the conversion of the reductant H in the fuel gas F in the anode channels 12, the produced anode exhausts J can be collected at respective anode outlet 22 in order to be collected by a further manifold 80 and then be led to the exhaust outlet 110.

The reactant gas G can enter the energy conversion arrangement 3 through the reactant inlet 100 in order to be then compressed in the compressor assembly 60. A further manifold 80 may be provided to lead the compressed reactant gas G after to the cathode inlets 23 provided by the pre-heating ducts 14 of the primary conversion zone i in a distributed manner to then exit the pre-heating ducts 14 at their respective end section 15 and enter the cathode channels 13 of the primary conversion zone i. After leaving the cathode channels 13 of the primary conversion zone i, the reactant gas G with the remaining amount of oxidant O can exit the respective cathode outlet 24 and may then be collected by another manifold 80 which can lead the reactant gas G to the expansion unit 40, for example, the turbine assembly 50 thereof.

After leaving the expansion unit 40, the reactant gas G can enter the second conversion zone ii, for example, through the central distribution assembly 90. The central distribution assembly 90 may comprise a distribution section 91 and/or a collection section 92 which can be separated from each other by a separation wall 93. A duct portion 94 of the distribution assembly 90 may be provided with openings 95 to distribute and/or collect the reactant gas G in the distribution section 91 and/or the collection section 92, respectively. Guiding elements 96 may be arranged within the duct portion 94 which can be configured to guide the reactant gas G to the openings 95 in the distribution section 91 and/or from the openings 95 in the collection section 92, respectively. In the present example, the duct portion 94 can be shaped as a tube while the guiding elements 96 may be shaped as cones tapering towards the inlet and/or outlet of the distribution section 91 and/or the collection section 92, respectively.

The central distribution assembly 90 can lead the reactant gas G to the outer cathode side C of the fuel cell elements 11 through respective cathode inlets 23 (see Figs. 2 and 3). After being further depleted of the oxidant O, the produced cathode exhausts K can then be collected through the openings 95 of the collection section 92 of the central distribution assembly 90. The collected cathode exhausts K can be released from the energy conversion arrangement 3 through the exhaust outlet 110 together with the anode exhausts J as an exhaust mix L. The energy conversion arrangement 3 may be shaped such that it extends essentially in a mirror-symmetric and/or line-symmetric manner with respect to a middle or centre axis M.

In the present example embodiment of the fuel cell element 11, the anode channel 12 can have an electrochemically active outer cathode element 32, where the fuel gas F is fed to an anode channel 12 in the form of a ring gap. The reactant gas G in the primary conversion zone i, for example, primary reactant air, is being led to the respective pre-heating duct 14, which can be formed as a tube, before the primary air is redirected to the inner cathode channel 13 at the end of the pre-heating duct. The reactant gas G in the secondary conversion zone ii, provided as secondary air, can be supplied to the outer cathode element 32.

The primary and secondary reactant gas G can have different flow directions, temperature profiles and pressure levels. The mechanical support of the fuel cell unit 10 (backbone) can be realized by a foam type of structure, metallic, ceramic, composite material and/or metal sheets that are not necessarily in a mechanical contact with each other but may be held in their position by respective manifolds 80. The outer area of the e.g. tube-shaped fuel cell elements 11 can be electrochemically active or non-active.

According to the present example, a principal cooling concept for the fuel cell unit 10 can be implemented in that the primary depleted reactant gas G collected at the cathode outlets 24 is being is cooled in a heat exchanger or by expansion in a turbine and then redirected to the secondary air compartment, which can be in contact to the outer electrochemically active (e.g., An2, Ely2, Ca2) or non-active area of the fuel cell elements 11. In case of a non-active outer surface cell area, the secondary air would be used for cooling purposes only.

The present example embodiments thus allow to provide a stack concept for SOFCs with integrated fuel gas channel and dual use of the primary cooling air. The fuel can be is fed to ring gaps between manifold plates where it reacts along the cell at the inner and outer surface areas. The depleted fuel off-gas can be collected between the manifold plates where it leaves the stack through another ring gap which is located between the secondary air centre tube and the manifold plate. Further downstream the fuel off-gas can be mixed with the air off-gas within the off-gas tube, whereas a catalytic oxidation of the residual fuel could optionally be integrated.

According to the present example embodiments, the primary reactant air can be supplied by the reactant inlet 100, for example, in the form of the air inlet tube, to the integrated air preheater. The expansion unit 40 can be provided in the form of a heat exchanger and/or a compressor/turbine arrangement. After the air is preheated and/or compressed, the air can be fed via the manifold 80 into the cell internal preheating tubes. The primary air can then be redirected at the end of the preheating tubes before it enters the inner cathode channels.

The depleted primary air can leave the fuel cell elements 11 via the respective manifold 80 in a counter flow direction to the fuel flow. The depleted primary air can be cooled and the expansion unit 40 by means of a heat exchanger and/or turbine expansion before it is fed into the secondary air centre tube (Fig. 9: 14a). The secondary air centre tube can be provided with the openings 95, for example, the form of perforations, and can be closed by means of the separation wall 93, e.g., half-way downstream in order to redirect the secondary air flow into a radial direction. The secondary air can thereby supplied be to the outer cathode.

Downstream the secondary air compartment, the depleted air can be collected again by the secondary air centre tube, where it leaves the stack into a mixing zone. The enclosure 20 may be provided in the form of a circular housing for the stack and can separate the secondary air compartment from the ambient surroundings S with respective thermodynamic conditions, which typically involve pressure conditions < 1 bar_abs for airborne application. Thus, an intermediated expansion of the primary air within the expansion unit 40 can help to reduce the required wall thickness and weight of the enclosure 20 of the stack.

The anode and respectively cathode potential of the cells are connected via respective negative and positive current collection plates Respective positive and negative interface terminals of the stack can penetrate the enclosure 20, for example, provided in the form of a circular housing of the stack in a gas tight connection. The positive and negative current collector terminals can be electrically insulated from the housing and piping.

While at least one exemplary embodiment has been presented in the foregoing detailed description, it should be appreciated that a vast number of variations exist. It should also be appreciated that the exemplary embodiment or exemplary embodiments are only examples, and are not intended to limit the scope, applicability, or configuration of the invention in any way. Rather, the foregoing detailed description will provide those skilled in the art with a convenient road map for implementing an exemplary embodiment of the invention. It will be understood that various changes may be made in the function and arrangement of elements described in an exemplary embodiment without departing from the scope of the claims.

Additionally, it is noted that "comprising" or "including" does not exclude any other elements or steps and "a" or "an" does not exclude a multitude or plurality. It is further noted that features or steps which are described with reference to one of the above exemplary embodiments may also be used in combination with other features or steps of other exemplary embodiments described above. Reference signs in the claims are not to be construed as a limitation.

### List of Reference Signs

| | |
|---|---|
| 1 | apparatus / vehicle / aircraft |
| 2 | energy system |
| 3 | energy conversion arrangement |
| 5 | propulsion unit |
| 6 | fuel line |
| 10 | fuel cell unit / fuel conversion device |
| 11 | fuel cell element / subunit |
| 12 | anode channel |
| 13 | cathode channel |
| 14 | pre-heating duct |
| 15 | end section |
| 20 | enclosure |
| 21 | anode inlet |
| 22 | anode outlet |
| 23 | cathode inlet |
| 24 | cathode outlet |
| 30 | electrolyte element |
| 31 | anode element |
| 32 | cathode element |
| 40 | expansion unit |
| 50 | turbine assembly |
| 60 | compressor assembly |
| 70 | heat exchange assembly |
| 80 | manifold |
| 90 | central distribution assembly |

| | |
|---|---|
| 91 | distribution section |
| 92 | collection section |
| 93 | separation wall |
| 94 | duct portion |
| 95 | opening |
| 96 | guiding element |
| 100 | reactant inlet |
| 110 | exhaust outlet |
| e | electron |
| i | primary conversion zone |
| ii | secondary conversion zone |
| A | anode side |
| C | cathode side |
| E | electrical power |
| F | fuel gas |
| G | reactant/conversion gas / air |
| H | reductant/hydrogen |
| J | anode exhausts |
| K | cathode exhausts |
| L | exhausts mix |
| M | middle/centre axis |
| O | oxidant/Oxygen |
| X | longitudinal direction |
| Y | transverse direction |
| Z | height direction |

## Claims

1. Energy conversion arrangement (2) for an apparatus (1), such as an aircraft, comprising
a fuel conversion device (10), in particular a fuel cell unit, for generating electrical and/or mechanical energy by oxidising a reductant (R) contained in a fuel gas (F) by means of an oxidant (O) contained in a reactant gas (G), with
at least one cathode element (32) configured to provide electrons (e) shed by the reductant (R) and to be picked up by the oxidant (O) during fuel conversion;
at least one cathode channel (13) configured to lead the reactant gas (G) along the at least one cathode element (32); and
at least one pre-heating duct (14) configured to lead the reactant gas (G) to the cathode channel (13) and to heat up the reactant gas (G) by heat provided by the reactant gas (G) in the cathode channel (13).

2. Energy conversion arrangement (2) according to claim 1, wherein the at least one cathode channel (13) and the at least one pre-heating duct (14) are at least partially configured to provide a counter-flow heat exchange between the reactant gas (G) in the at least one cathode channel (13) and the reactant gas (G) in the at least one pre-heating duct (14).

3. Energy conversion arrangement (2) according to claim 1 or 2, wherein the at least one pre-heating duct (14) is least partially arranged within the at least one cathode channel (13) and the reactant gas (G) in the at least one pre-heating duct (14).

4. Energy conversion arrangement (2) according to at least one of claims 1 to 3, wherein, the at least one cathode element (32), the at least one cathode channel (13) and/or the at least one pre-heating duct (14) are at least partially arranged coaxially with respect to each other.

5. Energy conversion arrangement (2) according to at least one of claims 1 to 4, further comprising a primary conversion zone (i) configured to operate at a first operating pressure of the fuel gas (F) and/or the reactant gas (G), and a secondary conversion zone (ii) configured to operate at a second operating pressure of the fuel gas (F) and/or the reactant gas (G).

6. Energy conversion arrangement (2) according to claim 5, wherein the first operating pressure is higher than the second operating pressure.

7. Energy conversion arrangement (2) according to claim 5 or 6, wherein a further comprising at least one expansion unit (40) arranged in a flow path of the reactant gas (G) between the primary conversion zone (i) and the secondary conversion zone (ii) and configured to expand the reactant gas (G) on its way from the primary conversion zone (i) to the secondary conversion zone (ii).

8. Energy conversion arrangement (2) according to claim 7, wherein the expansion unit (40) comprises a turbine assembly (50) and/or a heat exchange assembly (70) configured to cool down the reactant gas (G).

9. Energy conversion arrangement (2) according to claim 8, further comprising at least one compressor assembly (60) configured to be driven by the turbine assembly (50) and to compress the reactant gas (G) fed into the pre-heating duct (14).

10. Energy conversion arrangement (2) according to at least one of claims 5 to 9, wherein the primary conversion zone (i) at least partly surrounds the secondary conversion zone (ii).

11. Energy conversion arrangement (2) according to at least one of claims 5 to 10, wherein the primary conversion zone (i) and/or the secondary conversion zone (ii) comprise or comprises, respectively, a number of cathode channels (13) and/or pre-heating ducts, and at least one manifold (80) configured to collect and/or provide the reactant gas (G) from and/or to the cathode channels (13) and/or pre-heating ducts (14), respectively.

12. Energy conversion arrangement (2) according to claim 11, according to at least one of claims 1 to 11, further comprising
at least one anode element (31) configured to take up the electrons (e) shed by the reductant (R) and to be picked up by the oxidant (O) during fuel conversion; and
at least one anode channel (12) configured to lead the reactant gas (G) along the at least one anode element (31);
wherein the at least one cathode channel (13) at least partially extends within the at least one anode channel (12).

13. Energy conversion arrangement (2) according to at least one of claims 1 to 12, wherein the at least one cathode element (32), the at least one cathode channel (13), the at least one pre-heating duct (14), the at least one anode element (31) and/or the at least one anode channel (12) at least section-wise have a tubular, rectangular, trapezoidal or triangular shaped cross-section.

14. Energy system (2), in particular for powering a propulsion unit (5) for propelling an apparatus (1), such as an aircraft, comprising an energy conversion arrangement (3) according to at least one of claims 1 to 13.

15. Apparatus (1), in particular aircraft, comprising an energy conversion arrangement (3) according to at least one of claims 1 to 13 and/or an energy system (2) according to claim 14.
